## Europäisches Patentamt

(19) **European Patent Office**

**Office européen des brevets**

(11) Numéro de publication: **0 156 753**
**B1**

(12) # FASCICULE DE BREVET EUROPÉEN

(45) Date de publication du fascicule du brevet:
10.08.88

(51) Int. Cl.⁴: **H 04 B 3/46**

(21) Numéro de dépôt: **85460006.1**

(22) Date de dépôt: **05.03.85**

(54) Analyseur de bruit dans des câbles de transmission de signaux numériques.

(30) Priorité: **09.03.84 FR 8403790**

(43) Date de publication de la demande:
**02.10.85 Bulletin 85/40**

(45) Mention de la délivrance du brevet:
**10.08.88 Bulletin 88/32**

(84) Etats contractants désignés:
**CH DE GB IT LI NL SE**

(56) Documents cité:
FR-A-2 304 123
GB-A-1 418 839

ERICSSON REVIEW, vol. 51, no. 1, 1974, pages 21-28, Stockholm, SE; A. SÖDERBERG: "Automatic transmission measuring equipment, ATME2, for international telephone circuits"
ELECTRONICS LETTERS, vol. 7, no. 2, 28 janvier 1971, pages 36-38, Londres, GB; A.G. STODDART: "Method of testing P.C.M. encoders and decoders by a level-at-a-time process"

(73) Titulaire: **ETAT FRANCAIS représenté par le Ministre des PTT (Centre National d'Etudes des Télécommunications), 38- 40 rue du Général Leclerc, F-92131 Issy- les- Moulineaux (FR)**

(72) Inventeur: **Camborde, Jean- Marc, rue du Park Moan Brélevenez, F-22300 Lannion (FR)**
Inventeur: **Schirlin, Marcel, La Lettre, F-47270 Puymirol (FR)**
Inventeur: **Perrot, Jean- Claude, St. Connay Lanvellec, F-22420 Plouaret (FR)**

(74) Mandataire: **Le Guen, Louis François, CABINET Louis LE GUEN 38, rue Levavasseur B.P. 91, F-35802 Dinard Cédex (FR)**

## Description

La présente invention concerne un analyseur de bruit dans les câbles utilisés pour des transmissions de signaux numériques.

Dès l'apparition des systèmes de transmission par impulsions et codage (MIC), on a tenté d'utiliser les câbles téléphoniques des réseaux existants pour transmettre un certain nombre de communications. Il est alors devenu indispensable de parfaire la connaissance de certaines caractéristiques de ces câbles, telles que l'impédance, l'affaiblissement des paires, la diaphonie entre paires, aux fréquences voisines de la valeur de Nyquist.

Notamment, afin de déterminer le pourcentage de paires pouvant être utilisées dans un câble, on a procédé à des mesures systématiques d'affaiblissement paradiaphonique et d'écart télédiaphonique.

L'article intitulé "Mesure en régime numérique de la diaphonie sur des câbles à paires symétriques" par J. Boulvin, paru dans la revue technique française "Commutation et Transmission", 29e A., n° 2, avril 1975, pp. 194-208, décrit deux types de mesure: l'un dans lequel on utilise un générateur perturbateur fonctionnant en régime sinusoïdal à fréquence variable, l'autre dans lequel on utilise des générateurs de séquences numériques aléatoires.

Suivant l'article précité, on émet des séquences numériques pseudo-aléatoires, simultanément sur plusieurs paires perturbatrices et on mesure la tension efficace de bruit reçu dans un récepteur de mesure connecté sur une extrémité de la paire en observation. Ce récepteur de mesure est constitué par un amplificateur-correcteur analogue à celui d'un répéteur-régénérateur. La sortie de l'amplificateur-correcteur est reliée à un voltmètre efficace à large bande.

Dans la pratique, l'appareil de mesure décrit dans l'article précité est particulièrement utilisable pour tester des câbles spéciaux à paires symétriques entièrement réservés à la transmission du système numérique à 8,448 Mbit/s. Dans ces câbles entièrement réservés à la transmission numérique, la principale source de bruit est effectivement la diaphonie dont l'effet équivaut, avec une précision suffisante, à la superposition d'un bruit supposé gaussien au signal utile. De plus, comme ces câbles sont prévus pour un trafic important, le bruit gaussien y est pratiquement stationnaire.

L'article intitulé "Automatic transmission measuring equipment, ATME2, for international telephone circuits" par A. SÖDERBERG, paru dans ERIKSSON REVIEW, vol. 51, no. 1, 1974, page 21-28, décrit un analyseur de signaux de bruit comprenant un microprocesseur.

L'introduction de la télématique se heurte aujourd'hui à des obstacles tenant principalement à certaines insuffisances des réseaux téléphoniques existants. A ce sujet, on pourra se reporter utilement à la revue technique française "L'écho des recherches", n° 111 du er trimestre 1983, qui est consacrée à la présentation d'un "réseau intégrant téléphone et données", dit réseau RITD. Dans ce réseau futur, on utilisera des paires des câbles téléphoniques d'abonnés pour transmettre des données correspondant à des débits pouvant atteindre 2,048 Mbit/s. Dans le même câble, à proximité des paires de transmission numérique, subsisteront des paires affectées au trafic téléphonique analogique. On sait que les communications analogiques classiques engendrent des perturbations de type de bruits impulsifs, si bien que le type de mesure décrit dans l'article précité, lequel était satisfaisant pour un bruit gaussien stationnaire, ne convient plus.

Un objet de la présente invention consiste à prévoir un analyseur de bruit capable de traiter des bruits impulsifs aussi bien que des bruits gaussiens.

Suivant une caractéristique de l'invention, il est prévu un analyseur de signaux de bruit transmis par une paire téléphonique d'un câble téléphonique, la paire étant reliée à un égaliseur de transmission numérique, l'analyseur comprenant une horloge, une base de temps et un microprocesseur, une mémoire de données à accès aléatoire, un bus d'écriture de données, un bus de lecture de données, un bus d'adresse, un détecteur à deux seuils, positif +V et négatif -V', un circuit de formation de paquets de données, un registre de données horaires, un registre de mot de verrouillage de trame, le détecteur à seuils ayant son entrée reliée à la sortie de l'égaliseur et sa sortie reliée à l'entrée du circuit de formation de paquets de données, les sorties de données du circuit de formation de paquets de données, du registre de mot de verrouillage de trame et du registre de données horaires étant reliées au bus d'écriture de données, la sortie du compteur d'adresses étant reliée au bus d'adresse, l'horloge délivrant une fréquence rythme à l'égaliseur et au circuit de formation de paquets de données, le circuit de formation de paquets de données comprenant, d'une part, des moyens de délimitation pour délimiter en paquets de données le train binaire sortant du détecteur de bruit à seuils de telle sorte que chaque train soit considéré comme un paquet unique tant que ledit train n'a pas comporté un nombre prédéterminé de zéros au rythme de l'horloge, un registre de mémorisation octet par octet des données binaires de chaque paquet, la base de temps comportant des moyens pour déclencher à des instants prédéterminés l'écriture dans la mémoire de données à accès aléatoire des contenus du registre de données horaires, du registre de mémorisation et du registre de mot de verrouillage de trame, la base de temps comportant également une sortie reliée à l'entrée d'incrémentation du compteur d'adresses et une sortie reliée à l'entrée de remise à zéro du registre de mémorisation.

Suivant une autre caractéristique, il est prévu un analyseur de signaux de bruit transmis par une paire téléphonique d'un câble téléphonique, ladite paire étant reliée à un égaliseur de transmis sion numérique, l'analyseur comprenant une horloge, une base de temps et un microprocesseur avec une mémoire de données à accès aléatoire, un bus d'écriture de données, un bus de lecture de données, un bus d'adresse, un détecteur à deux seuils, positif +V et négatif -V, un circuit de formation de paquets de données, un registre de données horaires, un registre de mot de verrouillage de trame, le détecteur à seuils ayant son entrée reliée à la sortie de l'égaliseur et sa sortie reliée à l'entrée du circuit de formation de paquets de données, les sorties de données du circuit de formation de paquets de données, du registre de mot de verrouillage de trame et du registre de données horaires étant reliées au bus d'écriture de données, la sortie du compteur d'adresses étant reliée au bus d'adresse, l'horloge délivrant une fréquence rythme à l'égaliseur et au circuit de formation de paquets de données, le circuit de formation de paquets de données comprenant un circuit de délimitation de signal de bruit et un registre de mémorisation de signal de bruit, le circuit de délimitation comportant encore un compteur de nombre de bits zéros successifs compris entre deux suites ininterrompues de bits 1 et un comparateur comparant le contenu du compteur avec une valeur prédéterminée, la sortie dudit comparateur activant, quand il constate une égalité, une sortie reliée à l'entrée d'activation de la base de temps, laquelle a des sorties respectivement reliées aux entrées de commande de déclenchement d'écriture du registre de données horaires, du registre de mémorisation du signal de bruit et du registre de mot de verrouillage de trame, à l'entrée d'incrémentation du compteur d'adresses et à l'entrée de remise à zéro du registre de mémorisation.

Suivant une autre caractéristique, le registre de mémorisation reçoit les données d'un paquet de manière série, est cadencé par ladite fréquence de rythme et est remis à zéro soit après transfert vers le bus d'écriture de données d'un octet de paquet, soit lorsqu'une fin de paquet a été détectée sur le fil, le compteur d'adresse étant incrémenté à chaque transfert vers le bus d'écriture de données.

Suivant une autre caractéristique, au début d'un nouveau paquet; le compteur d'adresse est initialisé à une valeur mémorisée à la fin du dernier transfert précédent du registre de mémorisation vers le bus d'écriture de données.

Suivant une autre caractéristique, au cours de chaque cycle d'écriture d'un paquet, sont également transférés vers le bus d'écriture de données un nombre d'octets égal à celui des données horaires ainsi que le mot de verrouillage de trame.

Suivant une autre caractéristique, le registre de mémorisation est composé d'un registre d'octet relié à un registre tampon, le registre d'octet ayant son entrée de données reliée à la sortie du convertisseur analogique/numérique, son entrée d'horloge recevant la fréquence rythme et son entrée de remise à zéro reliée à la sortie correspondante de la base de temps, le registre tampon ayant sa sortie reliée au bus d'écriture de données et son entrée de commande de lecture reliée à une sortie de la base de temps, la base de temps activant, à chaque déclenchement, la séquence d'activations suivantes: activation de sa sortie vers le microprocesseur, activations de la sortie vers le registre de données horaires en nombre égal au nombre d'octets des données horaires, activation de la sortie vers le registre tampon après chaque octet reçu dans le registre d'octet et à la fin de chaque signal de bruit, activation de la sortie vers le registre de mot de verrouillage, activation de la sortie de remise à zéro du registre d'octet.

Suivant une autre caractéristique, l'analyseur comprend encore un circuit de mesure de crête dont l'entrée de signal est reliée à la sortie de l'égaliseur, l'entrée de commande de lecture est reliée à la base de temps et la sortie est reliée au bus d'écriture de données afin de transférer la valeur mesurée à chaque fin de paquet.

Suivant une autre caractéristique, la base de temps active l'entrée de commande de lecture du circuit de mesure de crête immédiatement après l'entrée de commande de lecture du registre de mot de verrouillage de trame.

Suivant une autre caractéristique, le détecteur à seuils comporte un circuit d'alimentation délivrant les tensions de seuil positive +V et négative -V' et une mémoire reliée audit circuit d'alimentation et à laquelle les valeurs absolues V et V' sont transmises par le microprocesseur. Les valeurs absolues V et V' peuvent être égales ou différentes.

Suivant une autre caractéristique, la valeur prédéterminée du nombre de zéros du circuit de délimitation est contenue dans un registre dont le contenu est transmis par le microprocesseur.

Suivant une autre caractéristique, le microprocesseur est relié à une mémoire de masse dans laquelle il transmet, entre deux signaux de bruit, les données des signaux de bruit lues dans la mémoire à accès aléatoire par le bus de lecture de données.

Les caractéristiques de l'invention mentionnées ci-dessus, ainsi que d'autres, apparaitront plus clairement à la lecture de la description suivante d'un exemple de réalisation, ladite description étant faite en relation avec les dessins joints, parmi lesquels:

la Fig. 1 est un bloc-diagramme général illustrant l'utilisation de l'analyseur de l'invention,

la Fig. 2 est un bloc-diagramme de l'analyseur de la Fig. 1,

la Fig. 3 est un schéma du détecteur de bruit à seuils de l'analyseur de la Fig. 2,

les Figs. 4a à 4c sont des diagrammes illustrant le fonctionnement du détecteur de bruit de la Fig. 3,

la Fig. 5 est le schéma du circuit de mise en paquets de l'analyseur de la Fig. 2, la Fig. 6 est le schéma de la base de temps de l'analyseur de la Fig. 2,

les Figs. 7a à 7x et 8a à 8p sont des diagrammes illustrant le fonctionnement des circuits des Figs. 5 et 6.

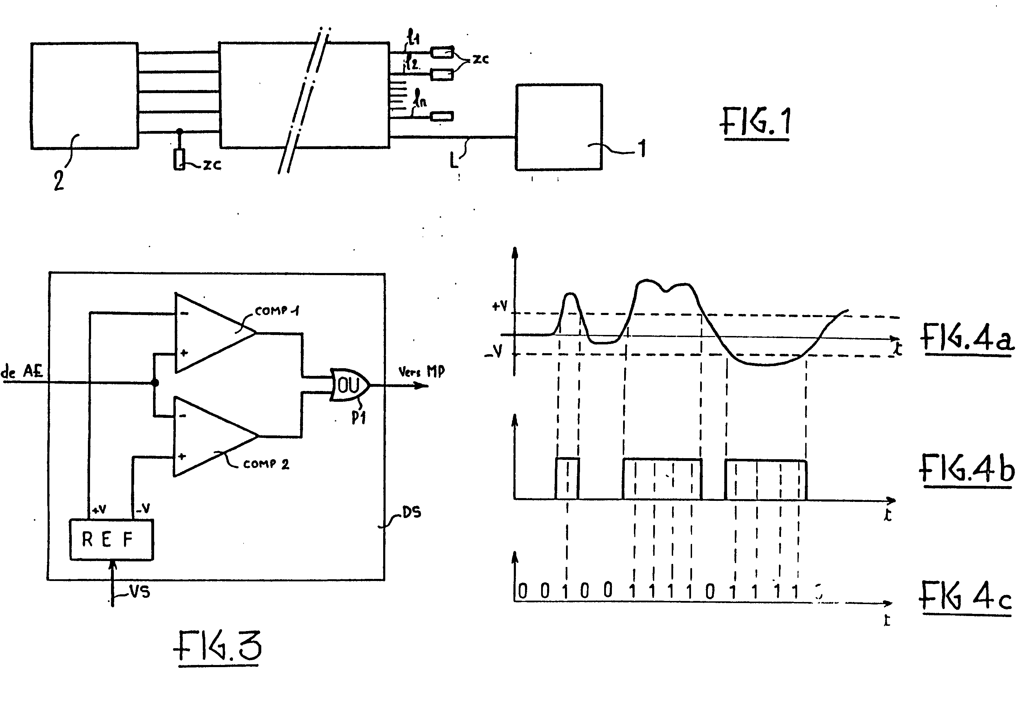

Le bloc-diagramme de la Fig. 1 montre un analyseur 1 relié à une paire téléphonique L qui fait partie d'un câble téléphonique C à tester. Les autres paires 11 à ln du câble C sont montrées, d'une part, reliées à un autocommutateur téléphonique 2 et, d'autre part, terminées sur des impédances caractéristiques Zc. L'autre extrémité de la paire L, par rapport à celle qui est reliée à l'analyseur 1, est montrée terminée sur son impédance caractéristique Zc.

Le montage de la Fig. 1 permet d'effectuer dans l'analyseur des mesures sur un câble déjà relié à un autocommutateur, ce cas étant en pratique un cas courant, car il permet d'apprécier les perturbations dues à l'autocommutateur. Mais l'analyseur n'est pas limité à ce type de perturbation. Il pourrait également être utilisé avec un câble non raccordé, dont les autres paires ne seraient pas terminées sur les impédances Zc. On peut ainsi analyser des perturbations dues à des bruits externes au réseau causés par le réseau de distribution électrique, des machines électriques, des ondes hertziennes de fréquences relativement basses. En fait, comme on le verra par la suite, l'analyseur suivant l'invention permet d'analyser des bruits gaussiens ou non, stationnaires ou non.

L'analyseur 1, Fig. 2, comprend essentiellement un amplificateur égaliseur AE, un détecteur de bruit à seuils DS, un circuit de mise en paquets MP, un détecteur de crête DCR, une base de temps BT, un microprocesseur MuP, une mémoire à accès aléatoire RAM, un compteur d'adresse CA et une horloge HD. Les entrées de signal des détecteurs DS et DCR sont reliées a la sortie de l'égaliseur AE. La sortie du détecteur de bruit à seuils DS est reliée à l'entrée de signal du circuit MP. La base de temps BT a ses sorties reliées aux autres circuits de l'analyseur.

L'analyseur 1 est complété par un registre de mot de verrouillage de trame YT, un registre d'heure RH. Au microprocesseur MuP, sont associés un dispositif d'affichage Aff et un clavier CL, tous deux classiques.

Entre la mémoire RAM, d'une part, et les circuits MP, VT, DCR, RH, et CA, d'autre part, est prévu un bus d'écriture de données BUSEDON. Le microprocesseur MuP est relié à la mémoire RAM par un bus de lecture de données BUSLDON, et par un bus d'adresses BUSADR. La sortie du compteur d'adresse CA est également reliée au bus BUSADR. Enfin, le microprocesseur MuP est relié à une mémoire de masse MM.

L'horloge HD délivre, d'une part, des signaux de fréquence bit H qui sont utilisés dans l'égaliseur AE, le circuit de mise en paquets MP et le détecteur de crête DCR et, d'autre part, des signaux de fréquences élevées h, par exemple à 2MHz, et 2h qui sont utilisés dans la base de temps BT. La fréquence bit H est, de préférence, variable et réglable à partir du microprocesseur MuP, auquel l'horloge HD est reliée par le fil VH.

La base de temps BT comporte des sorties de commandes de lecture vers les circuits MP, VT, DCR, RH et CA.

Le détecteur de bruit à seuils DS de la Fig. 3 comprend deux comparateurs constitués par deux amplificateurs différentiels COMP1 et COMP2. Le comparateur COMP1 a une entrée reliée à une source de potentiel +V et son autre entrée reliée à la sortie de l'égaliseur AE tandis que le comparateur COMP2 a une entrée reliée à la sortie de l'égaliseur AE et son autre entrée reliée à une source de tension -V. Les sorties des comparateurs COMP1 et COMP2 sont respectivement reliées aux deux entrées d'une porte OU P1 dont la sortie délivre le signal de sortie du détecteur DS. En pratique, les sources +V et -V sont des bornes de sortie d'un circuit d'alimentation REF qui a une entrée de commande reliée à un fil VS. Le circuit REF permet de faire varier la valeur de V en fonction du signal appliqué sur VS.

Le diagramme de la Fig. 4a illustre le signal de bruit impulsif délivré par l'égaliseur AE. Sur ce diagramme, on a indiqué les valeurs de seuil +V et -V. On peut aussi envisager l'utilisation de deux seuils +V et -V' ayant des valeurs absolues différentes.

Le diagramme de la Fig. 4b illustre la forme du signal de sortie de la porte OU P1. Ce signal de sortie se compose d'une suite de signaux de forme rectangulaire dont chacun correspond aux temps pendant lesquels l'amplitude du signal de la Fig. 4a a été supérieur à +V ou inférieur à -V. Les seuils +V et -V sont réglables suivant les valeurs appliquées à l'entrée de commande du circuit REF par le microprocesseur MuP, par l'intermédiaire du fil VS. En pratique, les seuils +V et - V sont réglables entre les limites + 2,5 V et - 2,5 V.

A la Fig. 4c, on a représenté le signal de la Fig. 4b échantillonné au rythme du signal d'horloge H. Le résultat de cet échantillonnage est, dans l'exemple montré, le train binaire 00100111-1011110, les "1" correspondant aux temps de l'impulsion de bruit pendant lesquels l'amplitude de cette impulsion se trouvait supérieure à +V ou à -V et les "0" correspondant aux temps où cette amplitude se trouvait entre les deux seuils +V et -V. Dans l'exemple montré, un des intervalles à bits 0 occupe deux temps élémentaires et l'autre un seul temps élémentaire.

Comme on le verra mieux dans la suite de la description, l'entrée de commande du circuit de mise en paquet MP permet, à partir du microprocesseur MuP, par l'intermédiaire du fil VR, de choisir la longueur maximale en nombre de bits 0 au-delà de laquelle deux suites interrompues de bits 1 sont considérées comme faisant partie de deux paquets d'erreurs successifs. Dans l'exemple de la Fig. 4c, si la longueur maximale d'intervalle est de un bit 0, il apparaît que le premier bit forme un seul événement et que les deux suites de bits 1 suivants ne forment aussi qu'un seul événement. Si la longueur maximale est de deux bits 0, le signal de la Fig. 4c ne forme qu'un seul événement entre le premier et 1e dernier bit 1.

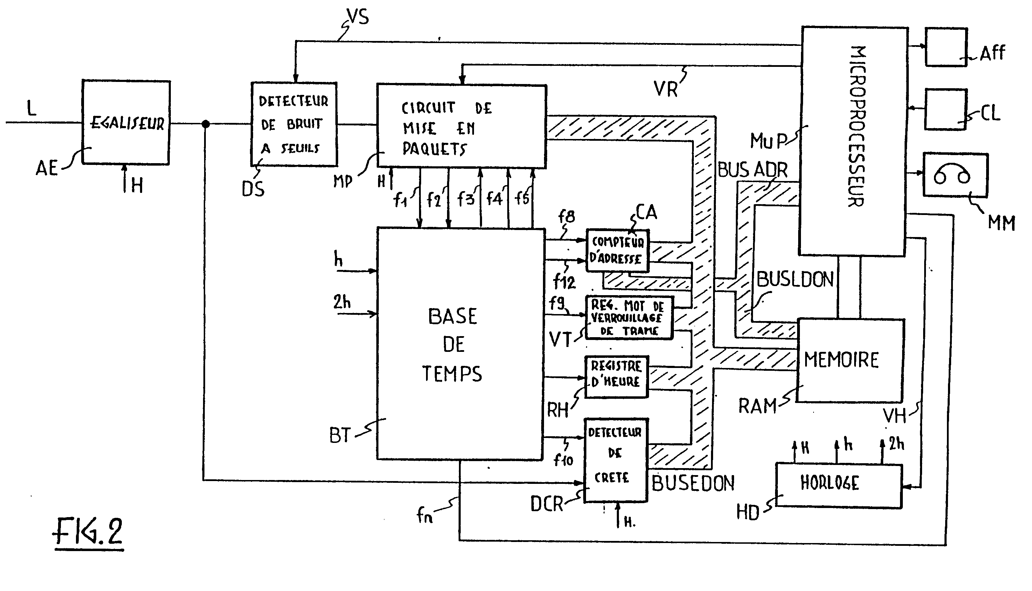

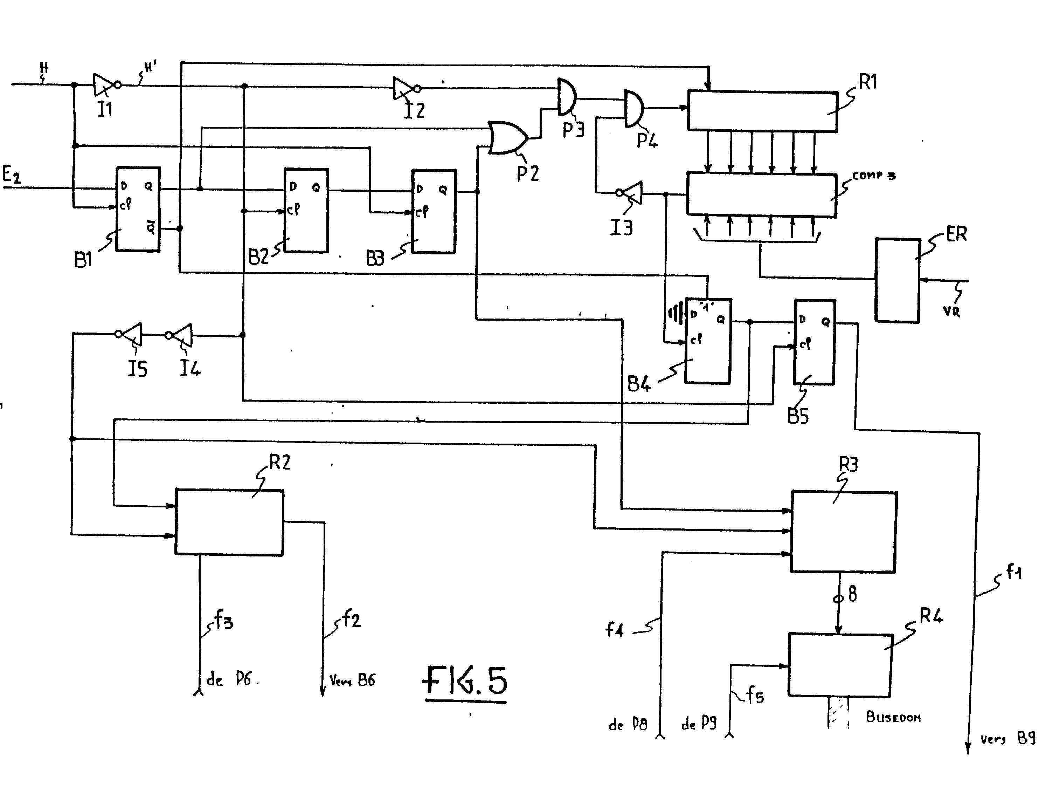

Dans le circuit de mise en paquet MP de la Fig. 5, l'entrée E2, à laquelle est appliqué le signal de sortie de la porte OU P1 de la Fig. 3 ayant la forme du signal de la Fig. 4b, est reliée à l'entrée de données D d'une bascule B1 dont l'entrée d'horloge C1 est reliée à l'entrée de rythme H. La sortie Q de la bascule B1 est reliée à l'entrée de données D d'une bascule B2 dont l'entrée d'horloge C1 est reliée à la sortie d'un inverseur I1 dont l'entrée est reliée à l'entrée H. L'inverseur I1 délivre le signal d'horloge H'. La sortie Q de la bascule B2 est reliée à l'entrée D de la bascule B3 dont l'entrée d'horloge est reliée à l'entrée H. Les signaux délivrés par les sorties Q des bascules B1, B2 et B3 sont respectivement désignées par QB1, QB2 et QB3.

Les sorties Q des bascules B1 et B3 sont reliées aux deux entrées d'une porte NI P2. La sortie de la porte NI P2 est reliée à une entrée d'une porte ET P3 dont la seconde entrée est reliée à la sortie d'un inverseur I2 dont l'entrée est reliée à la sortie de l'inverseur I1.

La sortie de la porte ET P3 est reliée à une entrée d'une porte ET P4 dont la sortie est reliée à l'entrée de données d'un compteur binaire R1 dont les sorties sont reliées aux premières entrées correspondantes d'un comparateur binaire COMP3, les secondes entrées du comparateur COMP3 sont reliées à la sortie d'un registre tampon ER dont l'entrée est reliée au microprocesseur MuP par un fil VR. La sortie du comparateur COMP3 est reliée, d'une part, à l'entrée d'un inverseur I3 dont la sortie est reliée à la seconde entrée de la porte ET P4 et, d'autre part, à l'entrée d'horloge d'une bascule B4. L'entrée de remise à zéro du compteur R1 est reliée à la sortie Q̄ de la bascule B1.

La bascule B4 a son entrée D reliée à la masse, son entrée de mise à "1" reliée à la sortie Q̄ de la bascule B1 et sa sortie Q reliée à l'entrée D d'une bascule B5. L'entrée d'horloge de la bascule B5 reçoit le signal H' et sa sortie est reliée à un fil f1 vers la base de temps BT.

La sortie Q de la bascule B4 est encore reliée à l'entrée de validation d'un registre R2 dont l'entrée d'horloge reçoit le signal H' à travers deux inverseurs I4 et I5 en série. Le registre est un diviseur par huit dont la sortie de débordement est reliée par un fil f2 à la base de temps BT. Son entrée de remise à zéro est reliée à la base de temps BT par un fil f3.

La sortie Q de la bascule B3 est encore reliée à l'entrée de données d'un registre à décalage R3 dont l'entrée d'horloge est reliée à la sortie de l'inverseur I5 et dont l'entrée de remise à zéro est reliée par un fil f4 à la base de temps BT. Les huits sorties parallèles du registre R3 sont reliées aux entrées d'un registre tampon R4 dont le contenu est donc constamment le même que celui du registre R3. Les sorties du registre R4 sont reliées au bus BUSEDON et son entrée de lecture est reliée par un fil f5 à la base de temps BT.

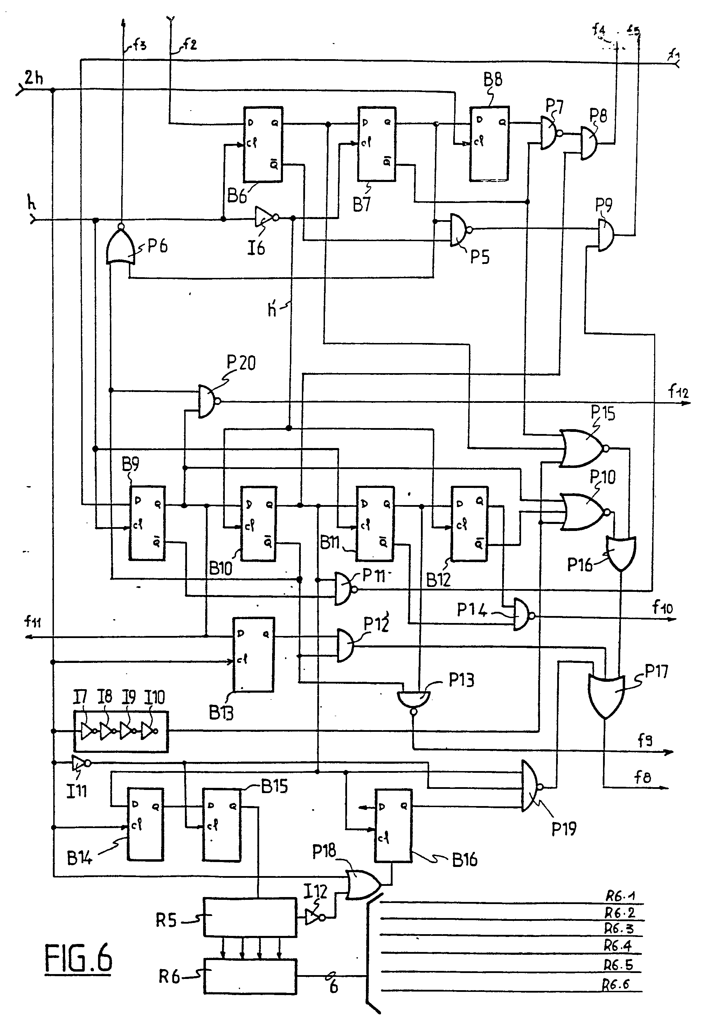

Dans la base de temps BT, Fig. 6, le fil f2 est relié à l'entrée D d'une bascule B6 dont l'entrée d'horloge C1 reçoit le signal d'horloge h et dont la sortie Q est reliée à l'entrée D d'une bascule B7. L'entrée d'horloge C1 de la bascule B7 est reliée à la sortie d'un inverseur I6 pour recevoir le signal h', complémentaire du signal h, et sa sortie Q est reliée à l'entrée D d'une bascule B8. La sortie Q̄ de la bascule B7 est encore reliée à une entrée d'une porte NON-ET P5 dont la seconde entrée est reliée à la sortie Q̄ de la bascule B6. Enfin, la sortie Q de la bascule B7 est reliée une entrée d'une porte NI P6 dont la sortie est reliée au fil f3.

La sortie Q de la bascule B8 est reliée à l'entrée d'une porte NON-ET P7 dont la seconde entrée est reliée à la sortie Q̄ de la bascule B7. La sortie de la porte NON-ET P7 est reliée à une entrée d'une porte ET P8 dont la sortie est reliée au fil f4, lequel transmet un signal de remise à zéro au registre a décalage R3.

Le fil f1 est relié à l'entrée D d'une bascule B9 dont l'entrée d'horloge reçoit le signal h et dont la sortie Q est reliée, d'une part, à l'entrée D d'une bascule B10 et, d'autre part, à une entrée d'une porte NI à trois entrées P10.

L'entrée d'horloge de la bascule B10 reçoit le signal h' de l'inverseur I6 et sa sortie Q est reliée à l'entrée D d'une bascule B11 dont l'entrée d'horloge C1 reçoit le signal h. La sortie Q de la bascule B11 est reliée à l'entrée D d'une bascule B12 dont l'entrée d'horloge reçoit le signal h' et dont la sortie Q̄ est reliée à la seconde entrée de la porte NI P10.

La sortie Q̄ de la bascule B9 et la sortie Q de la bascule B10 sont encore reliées aux deux entrées d'une porte NON-ET P11 dont la sortie est reliée à la seconde entrée de la porte ET P9 et la seconde entrée à la sortie de la porte NON-ET P5.

La sortie Q de la bascule B9 est encore reliée à l'entrée D d'une bascule B13 dont l'entrée d'horloge reçoit le signal 2h et dont la sortie Q est reliée à une entrée d'une porte ET P12. La sortie Q̄ de la bascule B10 est encore reliée, d'une part, à la seconde entrée de la porte NI P6 et, d'autre part, à une entrée d'une porte NON-ET P13 dont la seconde entrée est reliée à la sortie Q de la bascule B11. La sortie Q̄ de la bascule B11 et la sortie Q de la bascule B12 sont respectivement reliées aux deux entrées d'une porte NON-ET P14.

La troisième entrée de la porte NI P10 reçoit le signal 2h à travers un circuit à retard formé de quatre inverseurs I7 à I10. Une autre porte NI à trois entrées P15 a une entrée reliée à la sortie Q de la bascule B6, une autre entrée reliée à la sortie Q̄ de la bascule B7 et la troisième à la sortie de l'inverseur I10. Les sorties des portes P10 et P15 sont respectivement reliées aux entrées d'une porte OU P16 dont la sortie èst reliée à la première entrée d'une porte OU à trois entrées R17. La seconde entrée de la porte OU R17 est reliée à la sortie de la porte ET P12 et sa troisième entrée est reliée à la sortie d'une porte NON-ET P19. La sortie de la porte OU P17 est reliée à l'entrée d'incrémentation du compteur d'adresse CA.

La sortie de la porte NON-ET P13 est reliée par un fil f9 à l'entrée de commande de lecture du registre de mot de verrouillage de trame VT et celle de la porte NON-ET P14 par un fil f10 à l'entrée de commande de lecture du circuit de détection de crête DCR.

La sortie Q de la bascule B10 est reliée à l'entrée D d'une bascule B14 dont l'entrée d'horloge C1 reçoit le signal d'horloge 2h. La sortie Q de la bascule B14 est reliée à l'entrée D d'une bascule B15 dont l'entrée d'horloge C1 reçoit, à travers un inverseur I11, le signal 2h. La sortie Q de la bascule B15 est reliée à l'entrée d'un compteur R5. La sortie de débordement du compteur R5 est reliée, par un inverseur I12, à une entrée d'une porte OU P18 dont la sortie est reliée à l'entrée RAZ d'une bascule B16 et dont l'autre entrée reçoit le signal 2h. Dans la bascule B16, l'entrée D est reliée à la source de niveau "1", l'entrée d'horloge C1 est reliée à la sortie Q de la bascule B10 et la sortie Q est reliée à une entrée d'une porte ET P19. La seconde entrée de la porte P19 est reliée à la sortie Q de la bascule B10, la troisième reçoit le signal 2h, à travers l'inverseur I11, et la sortie est reliée à la troisième entrée de la porte P17.

Les sorties parallèles du compteur R5 sont reliées aux entrées d'un registre R6 comportant six sorties R6.1 à R6.6.

La sortie Q de la bascule B9 et la sortie Q̄ de la bascule B10 sont encore respectivement reliées aux deux entrées d'une porte NON-ET P20 dont la sortie est reliée par un fil f12 à une entrée du compteur d'adresse CA.

Le registre d'heure RH comprend un premier compteur qui contient à tout instant l'heure et un registre tampon à qui l'heure est délivrée chaque fois que le circuit de mise en paquet MR rencontre le début d'un événement. Les données relatives à l'heure comportent six octets, deux pour l'heure, deux pour la minute et deux pour la seconde, les six octets étant successivement délivrés au bus BUSEDON à la réception dans RH des signaux R6.1 à R6.6.

Les références des fils f1 à f5 et f8 à f12 sont indiquées à la Fig. 2 pour illustrer les liaisons entre les différents circuits.

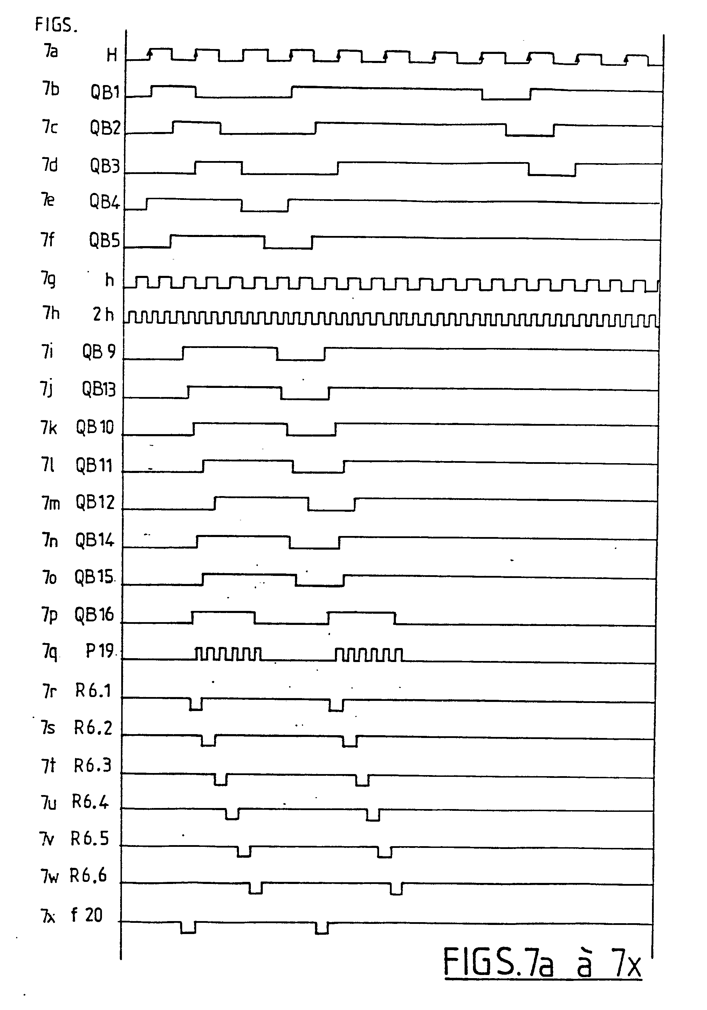

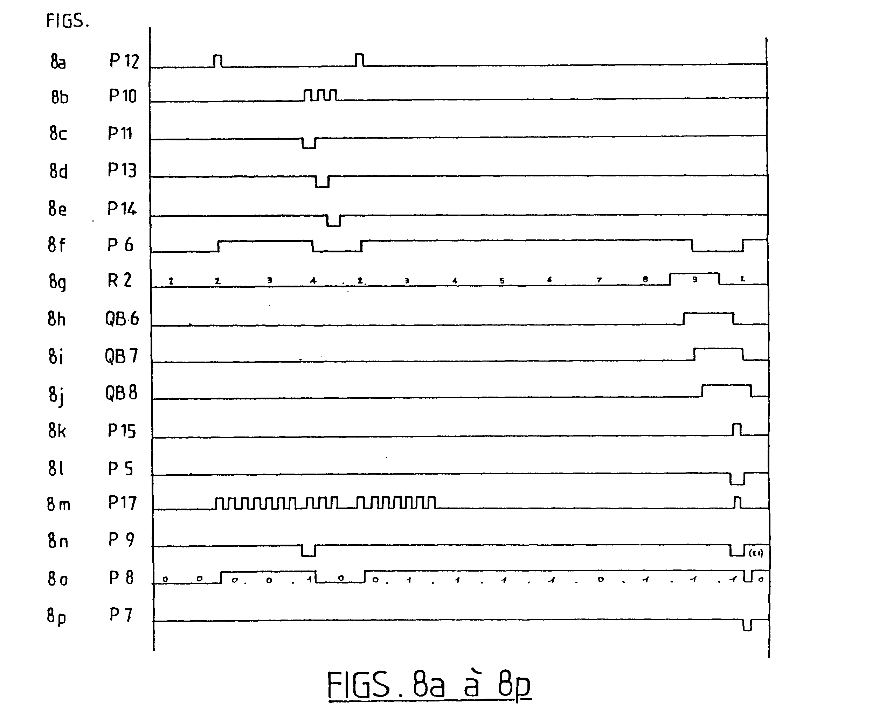

Les Figs. 7a à 7x et les Figs. 8a à 8p permettent d'illustrer le fonctionnement des circuits des Figs. 5 et 6. La Fig. 7a représente le signal H, dont le signal H', son complément, se déduit immédiatement. Par ailleurs, on suppose que le signal, Fig. 4b, appliqué à l'entrée E2 correspond eu train numérique binaire 0100111101111...La sortie Q de la bascule B1 délivre ce signal numérique cadré sur les transitions positives du signal H. Les Figs. 7b à 7d représentent les signaux QB1, QB2 et QB3 aux sorties Q des bascules B1, B2 et B3, ces signaux étant respectivement décalés d'une demi-période de H. Les Figs. 7e et 7f représentent les signaux QB4 et QB5 aux sorties Q des bascules B4 et BS. D'une manière plus générale, dans la suite de la description, les signaux QBn et Q̄Bn désignent respectivement les signaux émis par les sorties Q et Q̄ de la porte Bn.

Dans l'exemple de fonctionnement décrit, on suppose que le contenu du registre tampon ER est égal à 1, ce qui veut dire que le premier bit "1" du train mentionné ci-dessus constitue, à lui seul, un signal d'erreur complet puisqu'il est suivi de deux bits "0". Par contre, le seul bit "0" entre les quatre bits "1" et les quatre bits "1" de la suite du train ne sépare pas deux signaux d'erreur, mais est compris d'ans celui-ci.

Au début de chaque signal d'erreur, la sortie Q de la bascule B4 passe au niveau 1 par l'application d'un front négatif sur son entrée de mise à 1 reliée à la sortie Q̄ de la bascule B1. La sortie Q de la bascule B4 repasse au niveau 0, quand le comparateur COMP3 passe au niveau 1, c'est-à-dire quand le compteur R1 a reçu de la porte ET P4 une impulsion correspondant à l'émission de deux bits "0" consécutifs délivrés par la sortie Q de la bascule B1. Ainsi, le signal QB4 (ou le signal QB5 à un retard près) définit le début et la fin de chaque signal d'erreur.

Les Figs 7g et 7h représentent les signaux d'horloge h et 2h. Dans l'exemple décrit, on suppose que la fréquence du signal H est de 1 MHz et que celle du signal h est de 2 MHz.

Les Figs. 7i à 7p représentent respectivement les signaux QB9, QB13, QB10, QB11, QB12, QB14, QB15 et QB16 aux sorties Q des bascules B9, B13, B10, B11, B12, B14, B15 et B16. Tous les signaux QB9 à QB16 ont la même forme que le signal QB5, mais ils sont décalés dans le temps de manière à pouvoir créer au moyen de portes logiques des signaux de base de temps.

La Fig. 7x représente le signal de sortie de la porte NON-ET P20 qui permet de présenter à l'entrée du compteur d'adresse CA la dernière adresse d'écriture mémorisée.

Ainsi, les signaux Q̄B10 et QB13 sont combinés dans la porte ET P12 dont le signal de sortie est transmis par le fil f8, à travers la porte OU P17, afin de valider l'initialisation du compteur d'adresse CA à la valeur qui a été présentée. Le signal QB10 est utilisé, à travers les bascules B14 et B15, pour déclencher le compteur R5 qui fait transmettre par la porte P19 les impulsions montrées à la Fig. 7q, lesquelles sont transmises par le fil f8 au compteur d'adresse CA pour y incrémenter six fois l'adresse pendant la transmission des six octets d'heure. Par ailleurs, les Figs. 7r à 7w montrent les signaux respectivement émis par le registre R6 sur ses sorties R6.1 à R6.6, ces signaux déclenchant dans le registre d'heure l'émission des octets sur le bus BUSEDON.

Par ailleurs, le fil f11, qui transmet le signal QB9, est relié au microprocesseur MuP, pour lui signaler le début d'un paquet d'erreur.

A la Fig. 8c, est représenté le signal de sortie de la porte NON-ET P11 qui combine les signaux

$\bar{Q}$B9 et QB10. Le signal de la porte P11 est transmis par la porte P9 et un fil f5 au registre tampon R4 pour lui donner l'ordre d'évacuer le dernier octet de l'événement vers le bus BUSEDON. Au même instant, par P10, P16 et P17, le compteur d'adresse CA est incrémenté. La Fig. 8b montre les signaux de sortie de la porte P10. Il apparaît que les signaux de la porte P10 ne peuvent être émis que quand QB9 est au niveau 0, ce qui veut dire que le paquet d'erreur est terminé.

Le signal de sortie de la porte P13 est représenté à la Fig. 8d, il est la combinaison des signaux $\bar{Q}$B10 et QB11 et il est transmis au circuit de verrouillage de trame VT par le fil f9 pour ordonner à ce dernier circuit de transmettre son contenu au bus BUSEDON. Au même instant, l'avant-dernière impulsion de P10 est émise pour incrémenter le compteur d'adresse CA.

Le signal de sortie de la porte P14 montré à la Fig. 8e, est la combinaison des signaux $\bar{Q}$B11 et QB12 et il sert, par le fil f10, à déclencher dans le détecteur de crête DCR le transfert de la valeur de crête sur le bus BUSEDON.

La Fig. 8f montre le signal de sortie de la porte NI P6 qui combine les signaux $\bar{Q}$B10 et QB7 pour remettre à zéro le compteur R2, soit quand l'événement a duré moins de huit periodes de H par $\bar{Q}$B10, soit quand le compteur R2 a débordé par QB7. La Fig. 8g représente l'état de la sortie de débordement du compteur R2. Les Figs. 8h à 8j montrent les signaux QB6, QB7 et QB8, décalés dans le temps, qui ne passent au niveau 1 que quand le compteur R2 a débordé.

La Fig. 8k montre le signal de la sortie de la porte NI P15 qui combine les signaux QB6, $\bar{Q}$B7 et 2h et qui sert, par le fil f8, à incrémenter le compteur d'adresse CA afin de mettre en mémoire le premier octet de l'événement mémorisé dans le registre R4. La Fig. 8l montre le signal de sortie de la porte P5 qui combine les signaux $\bar{Q}$B6 et QB7 pour donner l'ordre au registre R4 d'évacuer l'octet qu'il contient sur le bus BUSEDON.

La Fig. 8m montre les impulsions qui sont transmises sur le fil f8 vers le compteur d'adresse CA, c'est-à-dire la somme logique des signaux d'entrée de P17.

La Fig. 8n montre les signaux de sortie de la porte P9 qui combine les signaux de sortie des porte P5 et P11 et qui est reliée à l'entrée de commande d'évacuation du registre R4.

La Fig. 8o montre le signal de sortie de la porte P8 qui combine les signaux $\bar{Q}$B7, QB8 et QB10 pour la remise à zéro du registre R3. La Fig. 8p montre le signal de sortie de la porte P7 qui combine les signaux $\bar{Q}$B7 et QB8 pour la porte P8.

Il apparaît en observant les Figs. 8a et 7q que les débuts des deux événements ou signaux d'erreur présents dans le train numérique. ..00100111101111... déclenchent les mêmes effets: une impulsion à la sortie de P12 et six impulsions en sortie de P19. Par la suite, comme le premier événement ne comporte qu'un seul bit, le compteur R2 ne va pas déborder, il faut donc déclencher, dès la fin de cet événement, comme le montrent les Figs. 8b à 8e, successivement la lecture de la donnée écrite dans R4, la lecture du mot de verrouillage de trame de VT et la lecture de l'octet écrit dans le détecteur de crête DCR. Par contre, dans le second événement qui dure au moins neuf bits, comme le montrent les Figs. 8k et 8l, il faut, quand le registre R2 a compté huit, déclencher la lecture de l'octet écrit dans le registre tampon R4 et remettre à zéro le registre d'écriture R3. A la fin du second événement, on retrouvera les impulsions des Figs. 8b à 8e.

**Revendications**

1. Analyseur de signaux de bruit transmis par une paire téléphonique d'un câble téléphonique, ladite paire (L) étant reliée à un égaliseur de transmission numérique (AE), l'analyseur comprenant une horloge (HD), une base de temps (BT) et un microprocesseur (MuP), une mémoire de données à accès aléatoire (RAM), un bus d'écriture de données (BUSEDON), un bus de lecture de données (BUDLDON), un bus se (BUSADR) caractérisé en ce qu'il comprend encore un détecteur (DC) à deux seuils, positif (+V) et négatif (-V'), un circuit de formation de paquets de données (MP), un registre de données horaires (RH), un registre de mot de verrouillage de trame (VT), le détecteur à seuils (DS) ayant son entrée reliée à la sortie de l'égaliseur (AE) et sa sortie reliée à l'entrée du circuit de formation de paquets de données (MP), les sorties de données du circuit de formation de paquets de données (MP), du registre de mot de verrouillage de trame (VT) et du registre de données horaires (RH) étant reliées au bus d'écriture de données (BUSEDON), la sortie du compteur d'adresses (CA) étant reliée au bus d'adresse (BUSADR), l'horloge (HD) délivrant une fréquence rythme (H) à l'égaliseur (AE) et au circuit de formation de paquets de données (MP), le circuit de formation de paquets de données (MP) comprenant, d'une part, des moyens de délimitation (R1, COMP3, ER, I3, B4, B5) pour délimiter en paquets de données le train binaire sortant du détecteur de bruit & seuils (DS) de telle sorte que chaque train soit considéré comme un paquet unique tant que ledit train n'a pas comporté un nombre prédéterminé de zéros au rythme (H) de l'horloge, un registre de mémorisation (R3) octet par octet des données binaires de chaque paquet, la base de temps (BT) comportant des moyens pour déclencher à des instants prédéterminés l'écriture dans la mémoire de données à accès aléatoire (RAM) des contenus du registre de données horaires (HD), du registre de mémorisation (R3) et du registre de mot de verrouillage de trame (VT), la base de temps comportant également une sortie reliée à l'entrée d'incrémentation du compteur d'adresses (CA) et une sortie reliée à l'entrée de remise à zéro du registre de mémorisation (R3).

2. Analyseu... ux de bruit transmis par une paire téléphonique d'un câble téléphonique, ladite paire (L) étant reliée à un égaliseur de transmission numérique (AE), l'analyseur comprenant une horloge (HD), une base de temps (BT) et un microprocesseur (MuP) avec une mémoire de données à accès aléatoire (RAM), un bus d'écriture de données (BUSEDON), un bus de lecture de données (BUDLDON), un bus d'adresse (BUSADR), caractérisé en ce qu'il comprend encore un détecteur (DS) à deux seuils, positif (+V) et négatif (-V), un circuit de formation de paquets de données (CP), un registre de données horaires (RH), un registre de mot de verrouillage de trame (VT), le détecteur à seuils (DS) ayant son entrée reliée à la sortie de l'égaliseur (AE) et sa sortie reliée à l'entrée du circuit de formation de paquets de données (MP), les sorties de données du circuit de formation de paquets de données (MP), du registre de mot de verrouillage de trame (VT) et du registre de données horaires (RH) étant reliées au bus d'écriture de données (BUSEDON), la sortie du compteur d'adresses (CA) étant reliée au bus d'adresse (BUSADR), l'horloge (HD) délivrant une fréquence rythme (H) à l'égaliseur (AE) et au circuit de formation de paquets de données (MP), le circuit de formation de paquets de données (MP) comprenant un circuit de délimitation (R1, COMP3, ER, I3, P2, P3, P4, B4, B5) de signal de bruit et un registre de mémorisation (R3) de signal de bruit, le circuit de délimitation comportant encore un compteur (R1) de nombre de bits zéro successifs compris entre deux suites ininterrompues de bits 1 et un comparateur (COMP3) comparant le contenu du compteur (R1) avec une valeur prédéterminée, la sortie dudit comparateur (COMP3) activant, quand il constate une égalité, une sortie (f1) reliée à l'entrée d'activation de la base de temps (BT), laquelle a des sorties respectivement reliées aux entrées de commande de déclenchement d'écriture du registre de données horaires (HD), du registre de mémorisation (R3) du signal de bruit et du registre de mot de verrouillage de trame (VT), à l'entrée d'incrémentation du compteur d'adresses (A) et à l'entrée de remise à zéro du registre de mémorisation (R3).

3. Analyseur suivant la revendication 1 ou 2, caractérisé en ce que le registre de mémorisation (R3) reçoit les données d'un paquet de manière série, est cadencé par ladite fréquence de rythme (H) et est remis à zéro, soit après transfert vers le bus d'écriture de données (BUSEDON) d'un octet de paquet, soit lorsqu'une fin de paquet a été détectée sur le fil (f1). le compteur d'adresse (CA) étant incrémenté à chaque transfert vers le bus d'écriture de données (BUSEDON).

4. Analyseur suivant l'une des revendications 1 à 3, caractérisé en ce qu'au début d'un nouveau paquet, le compteur d'adresse (CA) est initialisé à une valeur mémorisée à la fin du dernier transfert précédent du registre de mémorisation (R3) vers le bus d'écriture de données (BUSEDON).

5. Analyseur suivant l'une des revendications 1 à 4, caractérisé en ce qu'au cours de chaque cycle d'écriture d'un paquet, sont également transférés vers le bus d'écriture de données (BUSEDON) un nombre d'octets égal à celui des données horaires ainsi que le mot de verrouillage de trame.

6. Analyseur suivant la revendication 1 ou 2, caractérisé en ce que le registre de mémorisation (R3, R4) est composé d'un registre d'octet (R3) relié à un registre tampon (R4), le registre d'octet (R3) ayant son entrée de données reliée à la sortie du convertisseur analogique/numérique (B1, B2, B3), son entrée d'horloge recevant la fréquence rythme (H) et son entrée de remise à zéro reliée à la sortie correspondante (f4) de la base de temps (BT), le registre tampon (R4) ayant sa sortie reliée au bus d'écriture de données (BUSEDON) et son entrée de commande de lecture reliée à une sortie (f5) de la base de temps (BT), la base de temps (BT) activant, à chaque déclenchement, la séquence d'activations suivantes: activation de sa sortie vers le microprocesseur (MuP), activations de la sortie vers le registre de données horaires (RD) en nombre égal au nombre d'octets des données horaires, activation de la sortie (f5) vers le registre tampon (R4) après chaque octet reçu dans le registre d'octet (R3) et à la fin de chaque signal de bruit, activation de la sortie vers le registre de mot de verrouillage, activation de la sortie de remise à zéro du registre d'octet (R3).

7. Analyseur suivant l'une des revendications 1 à 6, caractérisé en ce qu'il comprend encore un circuit de mesure de crête (DCR) dont l'entrée de signal est reliée à la sortie de l'égaliseur (AE), l'entrée de commande de lecture est reliée à la base de temps (BT) et la sortie est reliée au bus d'écriture de données (BUSEDON) afin de transférer la valeur mesurée à chaque fin de paquet.

8. Analyseur suivant la revendication 7, caractérisé en ce que la base de temps (BT) active l'entrée de commande de lecture du circuit de mesure de crête (DCR) immédiatement après l'entrée de commande de lecture du registre de mot de verrouillage de trame (VT).

9. Analyseur suivant l'une des revendications 1 à 8, caractérisé en ce que le détecteur à seuils (DS) comporte un circuit d'alimentation délivrant les tensions de seuil positive +V et négative -V' et une mémoire reliée audit circuit d'alimentation et à laquelle les valeurs absolues V et V' sont transmises par le microprocesseur (MuP).

10. Analyseur suivant la revendication 9, caractérisé en ce que les valeurs absolues V et V' peuvent être égales ou différentes.

11. Analyseur suivant l'une des revendication 1 à 10, caractérisé en ce que la valeur prédéterminée du nombre de zéros du circuit de délimitation est contenue dans un registre (ER) dont le contenu est transmis par le microprocesseur (MuP).

12. Analyseur suivant l'une des revendications 1 à 11, caractérisé en ce que le microprocesseur (MuP) est relié à une mémoire de masse (MM) dans laquelle il transmet, entre deux signaux de bruit, les données des signaux de bruit lues dans la mémoire à accès (aléatoire (RAM) par le bus de lecture de données (BUSLDON).

**Patentansprüche**

1. Analysator für Geräuschsignale, die von einem Telefonpaar in einem Telefonkabel übertragen werden, wobei das genannte Paar (L) mit einem digitalen Übertragungs-Equalizer (AE) verbunden ist, und wobei der Analysator einen Taktgeber (AD), eine Zeitbasis (BT) und einen Mikroprozessor (MuP), einen Datenspeicher mit direktem Zugriff (RAM), einen Datenschreibbus (BUSEDON) und einen Datenlesebus (BUDLDON) umfaßt, dadurch gekennzeichnet, daß er ferner umfaßt: einen Schwellwert-Detektor (DS) mit zwei Schwellen - einer positiven (+V) und einer negativen (-V) -, eine Schaltung (MP) zur Bildung von Datenpaketen, ein Plandaten-Register (RK), ein Rahmeneinzigwort-Register (VT), daß der Eingang des Schwellwert-Detektors (DS) mit dem Ausgang des Equalizers (AE) und sein Ausgang mit dem Eingang der Schaltung (MP) zur Bildung von Datenpaketen verbunden ist, daß die Datenausgänge der die Datenpkete bildenden Schaltung (MP), des Rahmeneinzigwort-Registers (VT) und des Plandaten-Registers (RK) jeweils mit dem Datenschreibbus (BUSEDON) verbunden sind, daß der Ausgang des Adressenzählers (CA) mit dem Adressenbus (BUSADR) verbunden ist, daß der Taktgeber (HD) eine Taktfrequenz (H) an den Equalizer (AE) und an die Schaltung (MP) zur Bildung von Datenpaketen liefert, daß die Schaltung (MP) zur Bildung von Datenpaketen einerseits Begrenzungsmittel (R1, COMP3, ER, I3, B4, B5) enthält, um in Datenpaketen den binären Strom zu begrenzen, den der Schwellwert-Detektor (DS) liefert, so daß jeder Strom als ein einziges Paket betrachtet wird, solange der Strom nicht bei der Taktfrequenz (H) eine vorgegebene Zahl von Nullen enthält, daß ferner ein Byte-für-Byte Paketdaten-Speicherregister (R3) vorgesehen ist, daß die Zeitbasis (BT) Mittel enthält, um zu vorgegebenen Augenblicken das Schreiben des Inhalts des Plandaten-Registets (RH), des Speicherregisters (R3) und des Rahmeneinzigwort-Registers (VT) in den Speicher mit direktem Zugang (RAN) auszulösen, daß die Zeitbasis ferner einen Ausgang, der mit dem Inkrement-Eingang des Adressenzählers (CA) verbunden ist, und einen Ausgang, der mit dem Rückstell-Eingang des Speicherregisters (R3) verbunden ist, enthält.

2. Analysator für Geräuschsignale, die von einem Telefonpaar in einem Telefonkabel übertragen werden, wobei das genannte Paar (L) mit einem digitalen Übertragungs-Equalizer (AE) verbunden ist, und wobei der Analysator einen Taktgeber (HD), eine Zeitbasis (BT) und einen Mikroprozessor (MUP) mit einem Datenspeicher mit direktem Zugriff (RAN), einen Datenschreibbus (BUSEDON), einen Datenlesebus (BUSLDON) und einen Adressenbus (BUSADR) umfaßt, dadurch gekennzeichnet, daß er ferner umfaßt: einen Schwellwert-Detektor (DS) mit zwei Schwellen - einer positiven (+V) und einer negativen (-V) -, eine Schaltung (MP) zur Bildung von Datenpaketen, ein Plandaten-Register (RK)- ein Rahmeneinzigwort-Register (VT), daß der Eingang des Schwellwert-Detektors (DS) mit dem Ausgang des Equalizers (AE) und sein Ausgang mit dem Eingang der Schaltung (MP) zur Bildung von Datenpaketen verbunden ist, daß die Datenausgänge der die Datenpakete bildenden Schaltung (MP), des Rahmeneinzigwort-Speichers (VT) und des Plandaten-Registers (RK) jeweils mit dem Datenschreibbus (BUSEDON) verbunden sind, daß der Ausgang des Adressenzählers (CA) mit dem Adressenbus (BUSADR) verbunden ist, daß der Taktgeber (HD) eine Taktfrequenz (H) an den Equalizer (AE) und an die Schaltung (MP) zur Bildung von Datenpaketen liefert, daß die Schaltung (MP) zur Bildung von Datenpaketen eine Geräuschsignal-Begrenzungsschaltung (R1, COMP3, ER, I3, P2, P3, P4, B4, B5) und ein Geräuschsignal-Speicherregister (R3) enthält, daß die Begrenzungsschaltung ferner einen Zähler (R1), der die Anzahl der aufeinanderfolgenden Null-Bits zwischen zwei Folgen nicht unterbrochener logischer 1-Bits zählt, und eine Vergleichsschaltung (COMP3), die den Inhalt des Zählers (R1) mit einem vorgegebenen Wert vergleicht, enthält, daß der Ausgang der genannten Vergleichsschaltung (COMP3), wenn er eine Übereinstimmung feststellt, einen Ausgang (f1) aktiviert, der mit dem Aktivierungseingang der Zeitbasis (BT) verbunden ist, deren Ausgänge jeweils mit den Schreibauslöse-Steuereingängen des Plandaten-Registers (HD), des Geräuschsignal-Speicherregisters (R3) und des Rahmeneinzigwort-Registers (VT), mit dem Inkrement-Eingang des Adressenzählers (CA) und mit dem Rückstell-Eingang des Speicherregisters (R3) verbunden sind.

3. Analysator nach Anspruch 1 oder 2, dadurch gekennzeichnet, daß das Speicherregister (R3) der Reihe nach die Daten eines Pakets empfängt, durch die genannte Taktfrequenz (H) getaktet und auf Null zurückgestellt wird, entweder nach Übertragung eines Bytes zu dem Datenschreibbus (BUSEDON), oder wenn das Ende eines Pakets auf der Leitung (f1) festgestellt worden ist, wobei der Adressenzähler (CA) bei jeder Übertragung in Richtung auf den Datenschreibbus (BUSEDON) inkrementiert wird.

4. Analysator nach einem der Ansprüche 1 bis 3, dadurch gekennzeichnet, daß bei Beginn jedes neuen Pakets der Adressenzähler (CA) auf den Wert initialisiert wird, der am Ende der letzten vorhergehenden Übertragung vom Speicherregister (R3) zum Datenschreibbus (BUSEDON) gespeichert worden ist.

5. Analysator nach einem der Ansprüche 1 bis 4, dadurch gekennzeichnet, daß während jedes Paketschreibzyklus eine Anzahl von Bytes, die gleich derjenigen der Plandaten und des Rahmeneinzigworts ist, zum Datenschreibbus (BUSEDON) übertragen wird.

6. Analysator nach Anspruch 1 oder 2, dadurch gekennzeichnet, daß das Speicherregister (R3, R4) aus einem mit einem Pufferregister (R4) verbundenen Byte-Register (R3) besteht, daß der Dateneingang des Byte-Registers (R3) mit dem Ausgang eines Analog/Digital-Umsetzers (B1, B2, B3) verbunden ist, dessen Takteingang die Taktfrequenz (H) empfängt, und dessen Rückstell-Eingang mit dem entsprechenden Ausgang (f4) der Zeitbasis (BT) verbunden ist, daß der Ausgang des Pufferregisters (R4) mit dem Datenschreibbus (BUSEDON) und sein Lesesteuer-Eingang mit einem Ausgang (f5) der Zeitbasis (BT) verbunden ist, daß die Zeitbasis (BT) bei jedem Start die folgende Aktivierungsfolge auslöst: Aktivierung ihres Ausgangs zum Mikroprozessor (MuP), Aktivierung des Ausgangs zum Plandaten-Register (RD) für eine Anzahl, die gleich der Anzahl der Plandaten-Bytes ist, Aktivierung des Ausgangs (f5) zum Pufferspeicher (R4) nach jedem im Byte-Register (R3) empfangenen Byte und am Ende jedes Geräuschsignals, Aktivierung des Ausgangs zum Einzigwort-Register, Aktivierung des Rückstellausgangs des Byte-Registers (R3).

7. Analysator nach einem der Ansprüche 1 bis 6, dadurch gekennzeichnet, daß er ferner eine Spitzenmeßschaltung (DCR) aufweist, deren Signaleingang mit dem Ausgang des Equalizers (AE) verbunden ist, daß der Lesesteuer-Eingang mit der Zeitbasis (BT) und der Ausgang mit dem Datenlesebus (BUSEDON) verbunden ist, um am Ende jedes Pakets den Meßwert zu übertragen.

8. Analysator nach Anspruch 7, dadurch gekennzeichnet, daß die Zeitbasis (BT) den Lesesteuer-Eingang der Spitzenmeßschaltung unmittelbar nach einem Eingang eines Lesesteuerbefehls von dem Rahmeneinzigwort-Register (VT) aktiviert.

9. Analysator nach einem der Ansprüche 1 bis 8, dadurch gekennzeichnet, daß der Schwellwert-Detektor (DS) eine Speiseschaltung, die die Schwellwertspannungen +V und -V erzeugt, und einen Speicher enthält, der mit der genannten Speiseschaltung verbunden ist, und zu dem die absoluten Werte +V und -V von dem Mikroprozessor (MuP) übertragen werden.

10. Analysator nach Anspruch 9, dadurch gekennzeichnet, daß die absoluten Werte +V und -V gleich oder verschieden sein können.

11. Analysator nach einem der Ansprüche 1 bis 10, dadurch gekennzeichnet, daß der vorgegebene Wert für die Anzahl der Nullen der Begrenzungsschaltung in einem Register (ER) gehalten wird, dessen Inhalt von dem Mikroprozessor (MuR) übertragen wird.

12. Analysator nach einem der Ansprüche 1 bis 11, dadurch gekennzeichnet, daß der Mikroprozessor (MuP) mit einem Großraumspeicher (MM) verbunden ist, zu dem er zwischen zwei Gerauschsignalen die aus dem Speicher mit direktem Zugriff (RAM) über den Datenlesebus (BUSLDON) gelesenen Geräuschsignaldaten überträgt.

**Claims**

1. Analyzer for noise signals transmitted by a telephone pair in a telephone cable, said pair (L) being connected to a digital transmission equalizer (AE), the analyzer comprising a clock (ND), a time base (BT) and a microprocessor (MuP), a random access memory (RAM), a data write bus (BUSEDON), a data read-out bus (BUSLDON) an address bus (BUSADR), characterized in that it further comprises a two level, positive (+V) and negative (-V) threshold detector (DS), a data packet forming circuit (MP), a schedule data register (RH), a frame unique word register (VT), the threshold detector (DS) having its input connected from the output of equalizer (AE) and its output connected to the input of the data packet forming circuit (MP), the data outputs of the data packet forming circuit (MP), the frame unique word register (VT) and the schedule data register (RN) being respectively connected to the data write bus (BUSEDON), the output of address counter (CA) being connected to address bus (BUSADR), the clock (ND) generating a rate frequency (H) to equalizer (AE) and the data packet forming circuit (MP), the data packet forming circuit (MP) comprising, on one hand, delimiting means (R1, COMP3, ER, I3, B4, B5) to delimit into data packets the binary stream generated by the threshold detector (DS) such that each stream be considered as a unique data packet as long as the said stream is not comprised at rate (H) a predetermined number of zeros, a byte-by-byte packet data storage register (R3), a time base (BT) comprising means to initiate at predetermined instants the writing into the random access data memory (RAM) of the contents of the schedule data register (RH), the storage register (R3) and the frame unique word register (VT), the time base also comprising an output connected to the increment input of address counter (CA) and an output connected to the reset input of storage register (R3).

2. Analyzer for noise signals transmitted by a telephone pair in a telephone cable, the said pair being connected to a digital transmission equalizer (AE), the analyzer comprising a clock (ND), a time base (BT) and a microprocessor (MuP) with a random access data memory (RAM), a data write bus (BUSEDON), a data read bus (BUSLDON), and address bus (BUSADR), characterized in that it further comprises a two-level, positive (+V) and negative (-V) threshold detector (DS), a data packet forming circuit (CP), a schedule data register (RN), a frame unique word register (VT), the threshold detector (DS) having its input connected from the output of equalizer (AE) and its output connected to the input of the data packet forming circuit (MP), the data outputs of the data packet forming circuit (MP), the frame unique word register (VT), and the schedule data register being connected to the data write bus (BUSEDON), the output of address counter (CA) being connected to the address bus (BUSADR), the clock (ND) generating a rate frequency (N) to equalizer (AE) and the data packet forming circuit (MP), the data packet forming circuit (MP) a noise signal delimiting circuit (R1, COMP1, ER, I3, P2, P3, P4, B4, B5) and a noise signal storage register (R3), the delimiting circuit further comprising a counter (R1) counting the number of successive zero bits contained between two sequences of uninterrupted logical 1 bits and a comparator (COMP3) comparing the contents of counter (R1) with a predetermined value, the output of the said comparator (COMP3) enabling, when it detects an equality, an output (f1) connected to the enable input of the time base (BT), which has outputs respectively connected to the write enable control inputs of schedule data register (ND), noise signal storage register (R3) and the frame unique word register (VT), to the increment input of address counter (CA) and the reset input of the storage register (R3).

3. Analyzer in accordance with claim 1 or 2, characterized in that the storage register (R3) serially receives the data of a packet, is clocked by said rate frequency (N) and is reset, either after transfer of a byte from the packet to the data write bus (BUSEDON), or when the end of a packet has been detected on wire (f1), the address counter (CA) being incremented at each transfer toward the data write bus (BUSEDON).

4. Analyzer in accordance with one of the claims 1 to 3, characterized in that at the start of each new packet, the address counter (CA) is initialized to the value stored at the end of the last preceding transfer from the storage register (R3) to the write data bus (BUSEDON).

5. Analyzer in accordance with one of claims 1 to 4, characterized in that during each packet write cycle, a number of bytes equal to that of the schedule data as well as the frame unique word are transferred to the data write bus (BUSEDON).

6. Analyzer in accordance with claim 1 or 2, characterized in that the storage register (R3, R4) is made up of a byte register (R3) connected to a buffer register (R4), the byte register having its data input connected from the output of an analogtodigital converter (B1, B2, B3), its clock input receiving the rate frequency (H) and its reset input connected from the corresponding output (f4) of time base (BT), the buffer register having its output connected to the data write bus (BUSEDON) and its write enable input connected to one output (f5) of the time base (BT), the time base (BT) enabling, at each start, the following enable sequence enabling its output to the microprocessor (MuP), enabling the output to the schedule data register for a number equal to the number of data bytes, enabling the output (f5) to the buffer register (R4) after each byte received in the byte register (R3) and, at the end of each noise signal, enabling the output to the frame unique word register, enabling of the reset output of the byte register (R3).

7. Analyzer in accordance with one of the claims 1 to 6, characterized in that it also is comprised of a peak measurement circuit (DCR) whose signal input is connected to the output of equalizer (AE), read enable input is connected to time base (BT) and output is connected to the data write bus (BUSEDON) in order to transfer at the end of each packet the measured value.

8. Analyzer in accordance with claim 7, characterized in that the time base (BT) enables the read enable input of the peak measurement circuit immediately after an input of a read enable command from the frame unique word register (VT).

9. Analyzer in accordance with one of claims 1 to 8, characterized in that the threshold detector (DS) is comprised of a supply circuit generating the threshold voltages +V and -V' and a memory connected to the said supply circuit and to which the absolute values V and V' are transmitted from the microprocessor (MuP).

10. Analyzer in accordance with claim 9, characterized in that the absolute values V and V' may be equal or different.

11. Analyzer in accordance with one of claims 1 to 10, characterized in that the predetermined value for the number of zeros of the delimiting circuit is contained in a register (ER) whose content is transmitted from the microprocessor (MuP).

12. Analyzer in accordance with one of claims 1 to 11, characterized in that the microprocessor (MuP) is connected to a bulk memory (MM) to which it transfers, between two noise signals, the noise signal data read from the random access memory (RAM) through the data read bus (BUSLDON).

FIG.1

FIG.4a

FIG.4b

FIG.4c

FIG.3

FIG.2

FIG.5

R1 · COMP 5 · ER · VR · R3 · R4 · BUSEDOM · f1 · vers B9

P4 · I3 · B5 · B4 · f5 · de P9 · f4 · de P8

P3 · P2 · B3 · B2 · f8

I2 · I1 · H' · H · E2 · B1 · I4 · I5 · R2 · f2 · vers B6 · f3 · de P6

FIG.6

**0 156 753**

FIGS.

| 7a | H |
| 7b | QB1 |
| 7c | QB2 |
| 7d | QB3 |
| 7e | QB4 |
| 7f | QB5 |
| 7g | h |
| 7h | 2 h |
| 7i | QB 9 |
| 7j | QB13 |
| 7k | QB 10 |
| 7l | QB 11 |
| 7m | QB12 |
| 7n | QB14 |
| 7o | QB15 |
| 7p | QB16 |
| 7q | P 19 |
| 7r | R 6.1 |
| 7s | R 6.2 |
| 7t | R 6.3 |
| 7u | R 6.4 |
| 7v | R 6.5 |
| 7w | R 6.6 |
| 7x | f 20 |

FIGS.7a à 7x

FIGS. 8a à 8p